# EUROPEAN PATENT SPECIFICATION

(11) **EP 2 544 110 B1**
(45) Date of publication and mention of the grant of the patent: **08.01.2014**
(21) Application number: 12186901.0
(22) Date of filing: 27.06.2008
(51) Int. Cl.: G06F 17/50, B60R 16/02

(54) **Simulation bench for use in a computer-aided system for checking interaction/interference of a flexible body with interfacing bodies during its utilization**
Simulationsbank zur Verwendung in einem computergestütztem System zur Überprüfung der Interaktion/Interferenz eines beweglichen Körpers mit Kopplungskörpern während seiner Verwendung
Banc de simulation destiné à être utilisé dans un système assisté par ordinateur permettant de vérifier l'interaction/d'interférence d'un corps flexible avec des corps d'interfaçage pendant son utilisation

(43) Date of publication of application: 09.01.2013
(62) Divisional of application: 08425457.2
(73) Proprietor: ELASIS SOCIETA' CONSORTILE PER AZIONI, 80038 POMIGLIANO D'ARCO (NA) (IT)
(72) Inventor: Babbone, Carmine, 80038 POMIGLIANO D'ARCO (IT); Esposito, Gennaro, 10135 TORINO (IT); Calamida, Alessandro, 10135 TORINO (IT)
(74) Representative: Bergadano, Mirko

(56) References cited:
- GB-A- 2 265 261
- LEON J-C ET AL: "Modelling flexible parts for virtual reality assembly simulations which interact with their environment", SHAPE MODELING AND APPLICATIONS, SMI 2001 INTERNATIONAL CONFERENCE ON. MAY 7-11, 2001, PISCATAWAY, NJ, USA,IEEE, 7 May 2001 (2001-05-07), pages 335-344, XP010541348, ISBN: 978-0-7695-0853-5

## Description

The present invention broadly concerns checking the interaction/interference of a flexible body with interface bodies during its utilization. In particular, the present invention finds advantageous, but not exclusive, application in the automotive field for checking the interaction or interference of a flexible hose, through which an operating fluid passes during use, with components present close by to the flexible hose and by which the latter is constrained or simply operationally adjacent to.

For descriptive convenience, but without any loss in generality, the description that follows shall refer to a flexible hose of a motor vehicle braking system, the flexible hose being, in use, flowed through by a fluid, typically oil, which operates the braking members.

As is known, in the automotive field, during the development of a new motor vehicle, thorough and scrupulous checks on the interaction or interference that a flexible hose of a brake has with components to which, in use, it is constrained and/or that are operatively adjacent to it, are carried out for safety reasons.

In fact, in order to avoid obvious risk for the passenger safety, it must be guaranteed that, in the presence of any operating manoeuvre that can be performed with the motor vehicle, the brake's flexible hose is not damaged by the components to which it is constrained and/or that are adjacent to it and that, at the same time, the same flexible hose does not prevent the normal operation of the components to which it is constrained and/or that are adjacent to it.

For a better understanding of the description that follows, reference should be made to Figures 1, 2 and 3. In particular, Figure 1 shows a flexible hose 1 of a motor vehicle brake constrained in a known manner at a point *A* of the body 2 of the motor vehicle, Figure 2 shows the flexible hose 1 constrained in a known manner at a point *B* of a shock absorber 3 of the motor vehicle, and Figure 3 shows a flexible hose 1 constrained in a known manner at a point *C* of a strut 4 of a wheel of the motor vehicle, close to the brake shoes 5 of the wheel's brake.

Nowadays, techniques are known of for checking the interference of the flexible hose 1 with the components to which, in use, it is constrained and/or that are operatively adjacent to it, which contemplate the construction and utilization of physical prototypes of the constraining and/or adjacent components, or rather, in particular, of the shock absorber 3, strut 4, brake shoes 5 etc. These prototypes are generally made with the use of specially made dies.

Therefore, according to the known techniques, the checks are carried out on a physical mock-up, made with the various physical prototypes and the flexible hose 1, representing the suspension unit formed by the flexible hose 1 and the constraining and/or adjacent components.

The carrying out of the checks on the physical mock-up is subject to the physical construction of the components involved. In fact, these checks can only be carried out after the physical prototypes of the components have been made and, therefore, only at an advanced stage in the development process of the new motor vehicle.

Techniques are also known of for checking the interference of the flexible hose 1 with the constraining and/or adjacent components based on modelling the suspension unit according to the Finite Element Method (FEM).

Regarding known techniques based on the physical mock-up of the suspension unit, the Applicant has noted that whenever the checks show the need, for safety reasons, to modify one or more components of the system, it is necessary to modify the designs of one or more components, make one or more dies again, make one or more new physical prototypes, assemble the physical mock-up again and again carry out all of the checks, with consequent increases in development costs and times for the new motor vehicle, also and above all in consideration of the fact of being in an advanced stage of the development process.

Furthermore, the Applicant has also noted that to carry out the checks on a physical mock-up entails performing operationally complex measurements due to the complex structure of the physical mock-up itself, which faithfully reproduces the actual structure of the suspension unit.

Instead, with regard to known techniques based on modelling the suspension unit according to the Finite Element Method, the Applicant has noted that these techniques do not provide a true characterization of the interaction between the flexible hose 1 and the constraints *A, B* and *C.*

Finally, methods and apparatuses enabling the efficient design and repeatable and accurate construction of a complex wiring harness, such as for use in an aircraft engine, are currently known. For example, GB-A-2 265 261 discloses a method and an apparatus of this type. Unfortunately, the methods and apparatuses of this type are not particularly suitable for checking the interference of a flexible hose with components to which, in use, it is constrained and/or that are operatively adjacent to it.

The object of the present invention is that of providing a physical mock-up (simulation bench) where is possible to implement a methodology for checking the interaction or interference of a flexible hose with the components to which, in use, it is constrained and/or that are operatively adjacent to it, which does not suffer from the above-mentioned drawbacks of known art.

This object is achieved by the present invention in so far as it concerns a simulation bench for use in a computer-aided system for checking interaction or interference of a flexible body with other bodies to which, in use, it is constrained and/or that are operatively adjacent to it, as defined in the enclosed claims.

For a better understanding of the present invention, a preferred embodiment is now described, purely by way of a non-limitative example, with reference to the enclosed drawings (not all in scale), where:

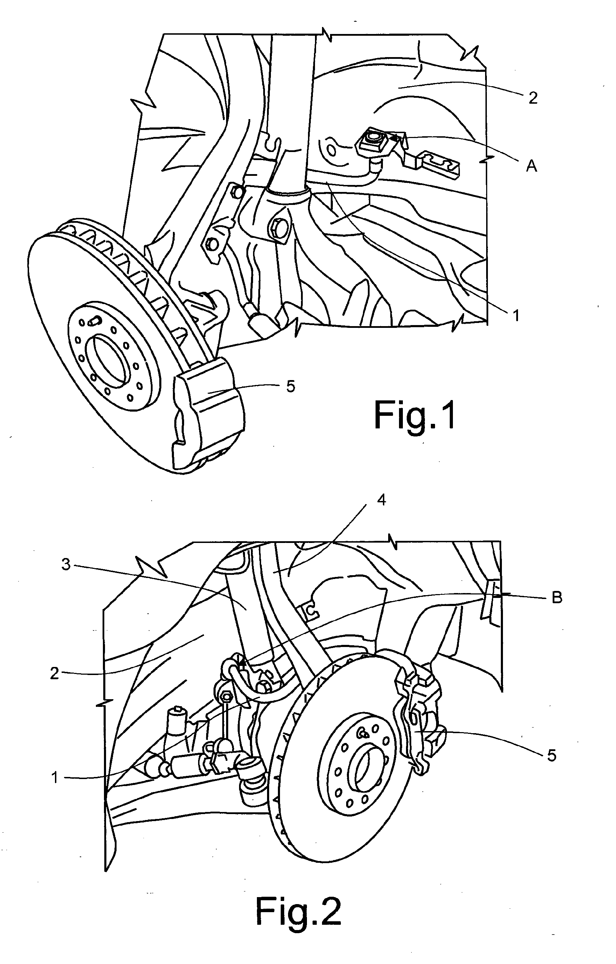

- Figure 1 shows a flexible hose of a brake of a motor vehicle constrained in a known manner to the body of the motor vehicle, -
- Figure 2 shows the flexible hose of Figure 1 constrained in a known manner to a shock absorber of the motor vehicle,

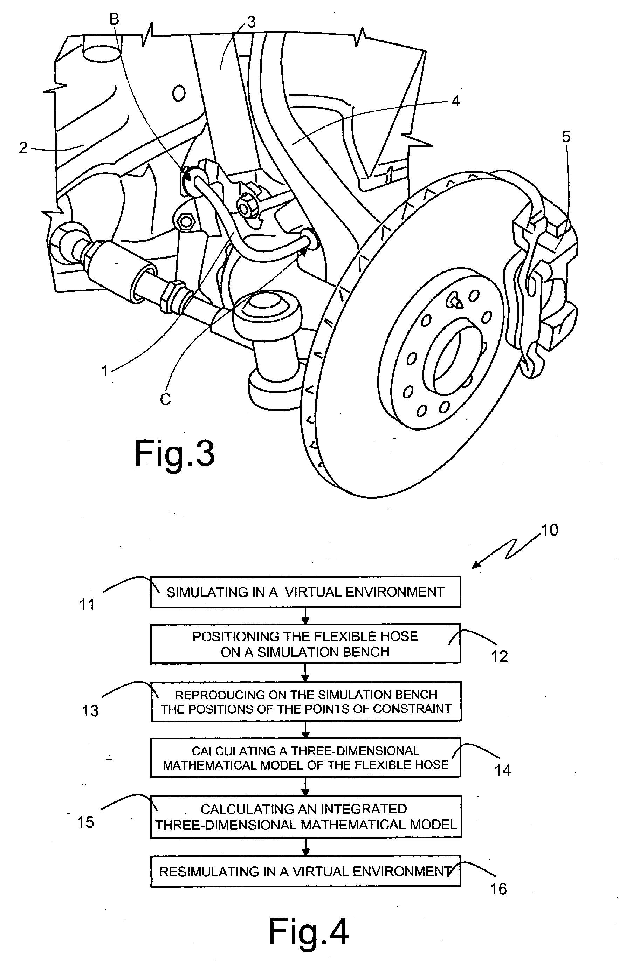

- Figure 3 shows the flexible hose of Figures 1 and 2 constrained in a known manner to a strut of a wheel of the motor vehicle,
- Figure 4 shows a flowchart of the operations implemented by a method for checking the interaction or interference of a flexible hose with components to which it is constrained and/or that are operatively adjacent, said method being based on the use of a simulation bench according to the present invention,

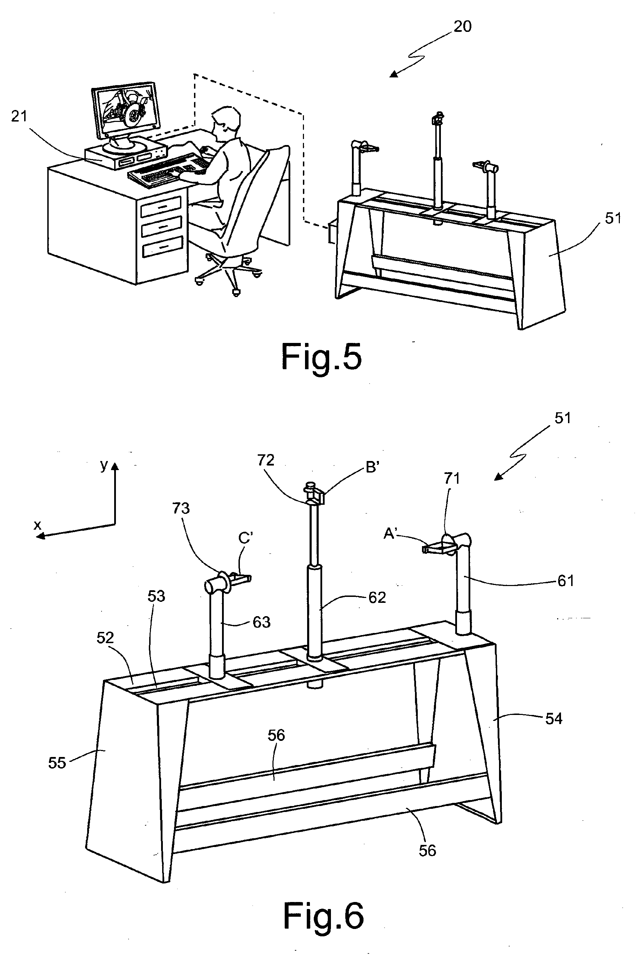

- Figure 5 shows a computer-aided system for checking the interaction or interference of a flexible hose with components to which it is constrained and/or that are operatively adjacent, said computer-aided system comprising the simulation bench according to the present invention,
- Figure 6 shows a simulation bench according to the present invention and forming part of the system in Figure 5,

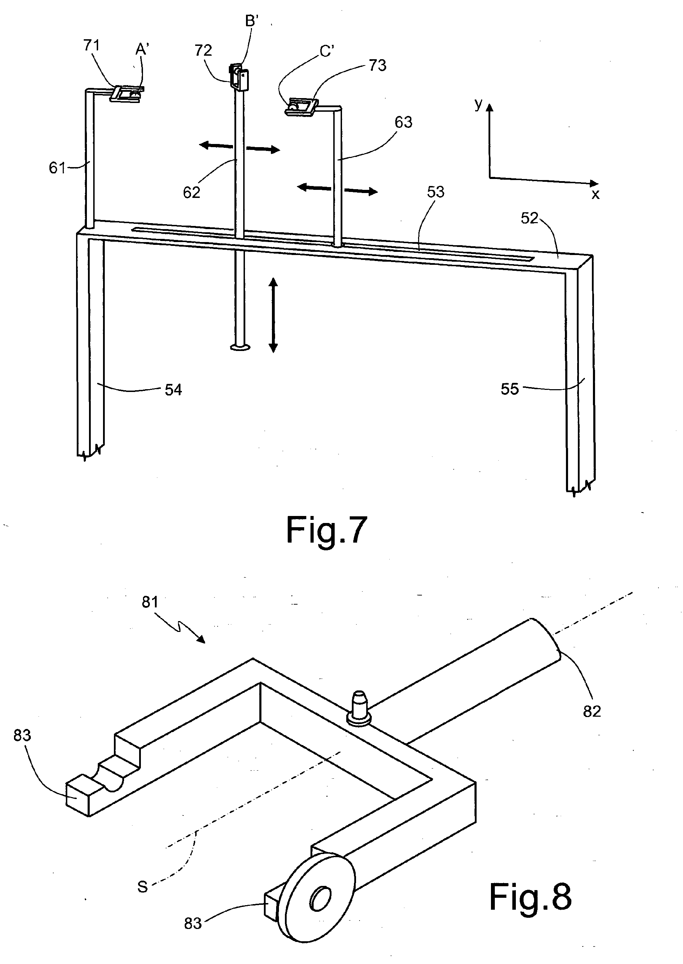

- Figure 7 shows a part of the simulation bench in Figure 6 in greater detail,
- Figure 8 shows a first component of the simulation bench in Figure 6 in greater detail,

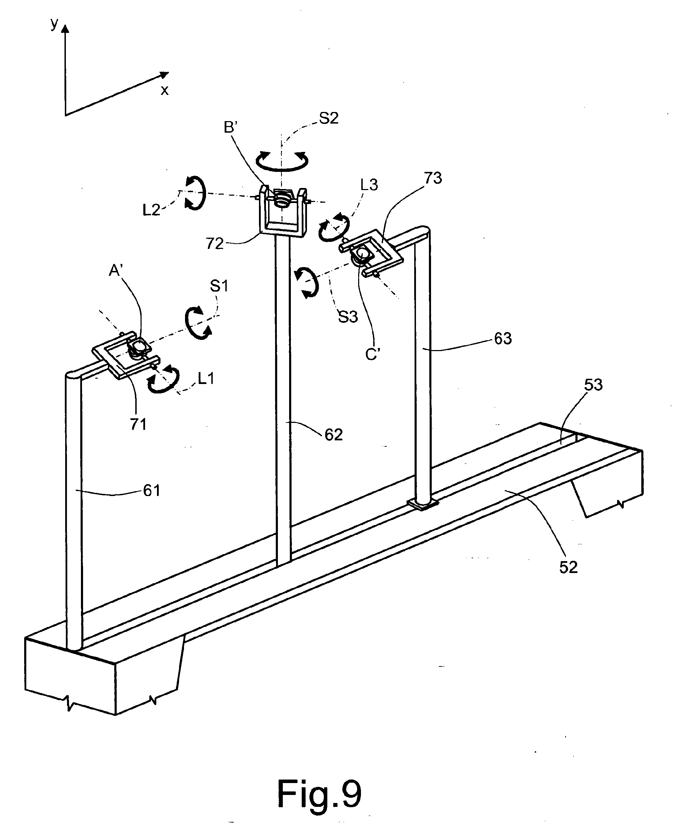

- Figure 9 shows a part of the part of the simulation bench in Figure 7 in greater detail,

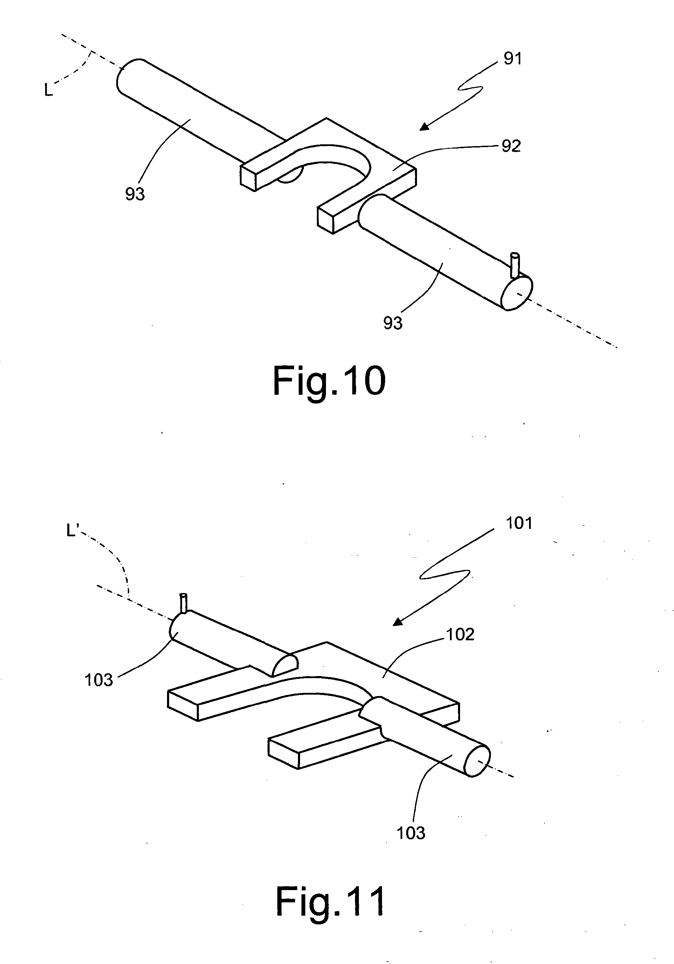

- Figure 10 shows a second component of the simulation bench in Figure 6 in greater detail, and
- Figure 11 shows a third component of the simulation bench in Figure 6 in greater detail.

The following description is provided to allow an expert in the field to make and use the invention. Various modifications to the embodiments presented shall be immediately obvious to an expert and the generic principles disclosed herein could be applied to other embodiments and applications, without however leaving the scope of protection of the present invention as defined in the appended claims.

Therefore, the present invention should not be intended as limited to just the embodiments described and shown herein, but be given the broadest scope of protection consistent with the principles and characteristics presented herein and defined in the enclosed claims.

In particular, in the following, for descriptive simplicity and without loss of generality, the computer-aided method for checking the interaction or interference of a flexible body with bodies to which, in use, it is constrained and/or that are operatively adjacent to it is described with explicit reference to the suspension unit shown in the previously mentioned and described Figures 1, 2 and 3, in which the flexible hose 1 is constrained at point *A* of the body 2, point *B* of the shock absorber 3 and point *C* of the strut 4 of the motor vehicle's wheel, close to the brake shoes 5 of the wheel's brake.

In addition, the above method is implemented by means of a software program that can be loaded into the memory of a computer and is capable of implementing the computer-aided method, described further on, for checking the interaction or interference of a flexible body with bodies to which, in use, it is constrained and/or that are operatively adjacent to it.

The computer-aided methodology for checking the interaction or interference of a flexible body with bodies to which, in use, it is constrained and/or that are operatively adjacent to it, is based on a virtual-real mixed simulation.

In particular, the virtual simulation is based on the exploitation of Computer Aided Design (CAD), thanks to which it is possible to create three-dimensional models of the constraining and/or adjacent components involved in the checks; in particular, with reference to Figures 1, 2 and 3, the body 2, the shock absorber 3, the strut 4 and the brake shoes 5. Instead, the real simulation is based on the utilization of a simulation bench, thanks to which the movements of the flexible hose 1 are simulated.

In detail, the movements of the components constraining and/or adjacent to the flexible hose 1 are estimated through the use of a calculation model that simulates the movements of the corresponding three-dimensional models, based on the operating manoeuvres that can be made with the motor vehicle, in a virtual environment, i.e. through the use of a computer. From the virtual simulation of the movements of the body 2, the shock absorber 3, the strut 4 and the brake shoes 5, it is also possible to obtain the movements of, and hence the positions taken by, the constraints of the flexible hose 1, i.e. the positions taken by point *A* of the body 2, by point *B* of the shock absorber 3 and by point *C* of the strut 4.

In addition, the simulation bench according to the present invention, as shall be described in detail further on, comprises constraints that are mock-ups of constraints *A, B* and *C*, and which are able to assume all the respective positions of constraints *A*, *B* and *C* calculated in the virtual simulation. The flexible hose 1 is then mounted on the simulation bench where the constraints are imposed on it according to the calculated positions. The shape taken by the flexible hose 1 as the positions of the constraints *A, B* and *C* change is then detected by means of a tracer point and reproduced in the CAD environment.

Lastly, checking of the interaction or interference of the flexible hose 1 with the body 2, the shock absorber 3, the strut 4 and the brake shoes 5 is carried out again by means of a simulation in a virtual environment, i.e. based on the use of a computer, of the movements of the three-dimensional models and the shapes of flexible hose 1 reproduced in the CAD environment according to the operating manoeuvres that can be made with the motor vehicle.

Going into greater detail, Figure 4 shows a flowchart of the operations implemented by the method 10.

In particular, the method 10 comprises the following phases:
- simulating in a virtual environment (block 11) motor vehicle's operating conditions by means of a computer to determine the positions of the constraints *A, B* and *C* in the aforesaid operating conditions, on the basis of a first three-dimensional mathematical model of the constraining and/or adjacent components 2, 3, 4 and 5,
- positioning the flexible hose on the simulation bench of the present invention (block 12) designed to reproduce the positions of the constraints *A, B* and *C* in a real environment,
- reproducing on the simulation bench the positions of the points of constraint (block 13) determined during the simulation in the virtual environment (block 11) and determining the corresponding spatial configurations of the flexible hose 1,
- calculating a three-dimensional mathematical model of the flexible hose (block 14) based on the determined spatial configurations of the flexible hose 1,
- calculating an integrated three-dimensional mathematical model (block 15) based on the first and second three-dimensional mathematical models, and
- re-simulating in a virtual environment (block 16) the motor vehicle's operating conditions by means of said computer and on the basis of said integrated three-dimensional mathematical model, to check for any interference of the flexible hose 1 with the constraining 2, 3 and 4 and/or adjacent 5 components situated close by in the motor vehicle's operating conditions.

In addition, a computer-aided system 20 for checking the interaction or interference of the flexible hose 1 with the components to which, in use, it is constrained and/or that are operatively adjacent to it 2, 3, 4 and 5 and that is suitable for implementing the method 10 is shown in Figure 5.

In particular, the system 20 comprises:
- a computer 21 programmed to implement the phase of simulating in a virtual environment (block 11), the phase of calculating a three-dimensional mathematical model of the flexible hose 1 (block 14), the phase of calculating an integrated three-dimensional mathematical model (block 15) and the phase of re-simulating in virtual environment (block 16), and
- a simulation bench 51 designed to provide points of constraint for the flexible body 1.

In detail, the phase of simulating in a virtual environment (block 11) comprises formulating and defining, within the CAD environment, the mathematics of each constraining and/or adjacent component, or rather of the body 2, the shock absorber 3, the strut 4 and the brake shoes 5, thereby creating a corresponding three-dimensional model in the CAD environment for each component and, in general, a three-dimensional mathematical model of the constraining and/or adjacent components.

In addition, the phase of simulating in a virtual environment (block 11) comprises finding the coordinates of characteristic points of the overall system formed by the constraining and/or adjacent components. These characteristic points include the constraints of the flexible hose 1, i.e. the constraints *A, B* and *C*.

Expediently, the phase of simulating in a virtual environment (block 11) also comprises providing an "overall system scheme" document in which the coordinates of the characteristic points are specified and a layout/drawing on which these characteristic points are identified.

In addition, the phase of simulating in a virtual environment (block 11) comprises, in general, virtually simulating, or rather simulating by use of the computer 21, the movements of the constraining and/or adjacent components 2, 3, 4 and 5 based on the operating manoeuvres that can be made with the motor vehicle on the basis of the three-dimensional mathematical model of said components 2, 3, 4 and 5, and, in particular, calculating the positions assumed by the characteristic points based on these operating manoeuvres.

Expediently, the virtual simulation is based on the "overall system scheme" document.

In addition, the phase of simulating in a virtual environment (block 11) can expediently include providing a table of the results in which the coordinates of the characteristic points based on the simulated operating manoeuvres are listed and a trace in electronic form for setting up the movements of the constraining and/or adjacent components 2, 3, 4 and 5 in a virtual environment.

Then, the phase of positioning the flexible hose on the simulation bench (block 12) comprises positioning the flexible hose 1 on the simulation bench 51, which is designed to reproduce the positions of the points of constraint *A, B* and *C* of the flexible hose 1 in a real environment.

In general, before proceeding with the description of the method 10 and, in particular, before providing further details on the phase of positioning the flexible hose on the simulation bench (block 12), the previously introduced simulation bench 51, on which the phase of reproducing on the simulation bench the positions of the points of constraint *A, B* and *C* (block 13) is based, shall be described in detail.

In particular, Figure 6 shows the simulation bench 51 according to the present invention.

In detail, as shown in Figure 6, the simulation bench 51 comprises an upper part 52 having a substantially rectangular shape in plan with a main extension parallel to a first direction *x*. The upper part 52 is fitted with tracks 53, also having the main extension parallel to the first direction *x*, and suitable for allowing mobile elements to run parallel to the first direction *x*. On the simulation bench 51, the upper part 52 is supported by a first 54 and a second supporting foot 55, both having their main extension parallel to a second direction *y* perpendicular to the first direction *x.*

Expediently, as shown in Figure 6, the simulation bench 51 can also comprise two or more side brackets 56, having a substantially rectangular shape in plan with the main extension parallel to the first direction *x* and connected to both the first 54 and the second supporting foot 55 in order to improve the stability and rigidity of the simulation bench 51.

In addition, the simulation bench 51 comprises a first 61, a second 62 and a third arm 63 having their main extension parallel to the second direction *y*.

The translations that can be performed by the arms 61, 62 and 63 are schematically indicated by the arrows in Figure 7.

In detail, as shown in Figure 7, a first end of the first arm 61 is connected in a fixed manner to the upper part 52 in correspondence to the first supporting foot 54, a first end of the second arm 62 is connected to the tracks 53 so that the second arm 62 can run on the tracks 53 parallel to the first direction *x*, and a first end of the third arm 63 is connected to the tracks 53 so that the third arm 63 can also run on the tracks 53 parallel to the first direction *x.*

Furthermore, always as shown in Figure 7, the second arm 62 is connected to the tracks 53 so that it can also run parallel to the second direction *y*.

Expediently, the second arm 62 can consist of a telescopic arm, i.e. formed by two or more tubular elements that slide one inside the other, parallel to the second direction *y*.

In addition, as shown in Figures 6 and 7, the simulation bench 51 also comprises a first 71, a second 72 and a third fork 73. In particular, Figure 8 shows an example of embodiment 81 of the forks 71, 72 and 73 having a Y-shape defining an axis of symmetry indicated by *S*, and provided with a first end 82 and a pair of second ends 83 symmetrical with respect to the axis of symmetry *S.*
As shown in Figures 6 and 7, the first end of the first fork 71 is connected to a second end of the first arm 61, the first end of the second fork 72 is connected to a second end of the second arm 62, and the first end of the third fork 73 is connected to a second end of the third arm 63.

In particular, the respective axes of symmetry of the first 71 and the third fork 73 extend parallel to the first direction *x,* while the axis of symmetry of the second fork 72 extends parallel to the second direction *y*.

The rotations that can be performed by the forks 71, 72 and 73 are schematically indicated by the arrows in Figure 9.

In detail, as shown in Figure 9, the first fork 71 is connected to the second end of the first arm 61 so that it can angularly turn with respect to its axis of symmetry, indicated by *S1*, the second fork 72 is connected to the second end of the second arm 62 so that it can angularly turn with respect to its axis of symmetry, indicated by *S2,* and the third fork 73 is connected to the second end of the third arm 63 so that it can angularly turn with respect to its axis of symmetry, indicated by *S3.*

In addition, as shown in Figures 6, 7 and 9, the simulation bench 51 also comprises a first fastener device *A*' connected to the pair of second ends of the first fork 71, a second fastener device *B*' connected to the pair of second ends of the second fork 72, and a third fastener device *C'* connected to the pair of second ends of the third fork 73.

In particular, the fastener devices *A*', *B'* and *C'* can expediently comprise a bush, as shown in Figure 10 and Figure 11.

In detail, Figure 10 shows an example of embodiment 91 of the first *A*' and the third fastener device *C'* formed by a bush 92 between two arm portions 93 defining a longitudinal axis indicated by *L*, while Figure 11, instead, shows an example of embodiment 101 of the second fastener device *B*' formed by a bush 102 between two arm portions 103 defining a longitudinal axis indicated by *L'.*

Alternatively, the first *A*' and the third fastener device *C'* could comprise a chuck.

The bushes and/or chucks of the fastener devices *A*', *B*' and *C'* are designed to lock the flexible hose 1.

In addition, the rotations that can be performed by the fastener devices *A*', B' and *C*' are also schematically indicated by the arrows in Figure 9.

In detail, the first fastener device *A*' is connected to the first fork 71 so that it can angularly turn with respect to its own longitudinal axis *L1*, which is perpendicular to the axis of symmetry *S1* of the first fork 71. The second fastener device *B*' is connected to the second fork 72 so that it can angularly turn with respect to its own longitudinal axis *L2*, which is perpendicular to the axis of symmetry *S2* of the second fork 72. The third fastener device *C'* is connected to the third fork 73 so that it can angularly turn with respect to its own longitudinal axis *L3*, which is perpendicular to the axis of symmetry *S3* of the third fork 73.

The first *A*', second *B*' and third fastener device *C*' are mock-ups of constraint *A*, constraint *B* and constraint *C* respectively and, thanks to the structure of the simulation bench 51 just described, are designed to assume all of the respective positions of the constraints *A*, *B* and *C*.

Furthermore, the first fastener device *A*' is such as to allow the flexible hose 1 to turn around its own axis of symmetry to allow the simulation of any torsional pre-tensioning that might occur during the mounting of the flexible hose 1 on the motor vehicle.

The simulation bench 51 can have manual adjustment, or rather the positions and movements of the arms 62 and 63, the forks 71, 72 and 73, and the fastener devices *A*', *B*' and *C*' are set by a user, or be automatic, i.e. piloted by the computer 21, as indicated by the dashed arrow that connects the computer 21 to the simulation bench 51 in Figure 5.

In the second case, the automatic simulation bench 51 also comprises:
- at least one actuator (not shown) connected to the second arm 62 designed to make it run on the tracks 53 parallel to the first direction *x*,
- at least one actuator (not shown) connected to the second arm 62 designed to make it move parallel to the second direction *y*,
- at least one actuator (not shown) connected to the third arm 63 designed to make it run on the tracks 53 parallel to the first direction *x*,
- at least one actuator (not shown) connected to the first fork 71 designed to make it turn around its own axis of symmetry *S1*, both clockwise and anticlockwise,
- at least one actuator (not shown) connected to the second fork 72 designed to make it turn around its own axis of symmetry *S2*, both clockwise and anticlockwise,
- at least one actuator (not shown) connected to the third fork 73 designed to make it turn around its own axis of symmetry *S3*, both clockwise and anticlockwise,
- at least one actuator (not shown) connected to the first fastener device *A*' designed to make it turn around its own longitudinal axis *L1,* both clockwise and anticlockwise,
- at least one actuator (not shown) connected to the first fastener device *A*' designed to turn the flexible hose 1 around its own axis of symmetry, both clockwise and anticlockwise,
- at least one actuator (not shown) connected to the second fastener device *B*' designed to make it turn around its own longitudinal axis *L2*, both clockwise and anticlockwise,
- at least one actuator (not shown) connected to the third fastener device *C*' designed to make it turn around its own longitudinal axis *L3*, both clockwise and anticlockwise,
- position sensors (not shown) designed to detect the positions of the arms 62 and 63, the forks 71, 72 and 73, and the fastener devices *A*', *B*' and *C*',
- a servomotor (not shown) designed to drive the actuators and so guide the movements of the arms 62 and 63, the forks 71, 72 and 73, and the fastener devices *A', B*' and *C*', and
- a hardware/software interface (not shown) designed to connect the simulation bench 51 to the computer 21, which, on the basis of the coordinates of the constraints *A*, *B* and *C*, calculates the corresponding positions of the arms 62 and 63, the forks 71, 72 and 73, and the fastener devices *A*', *B*' and *C*', and, via the hardware/software interface, controls the servomotor, the actuators and the position sensors in order to move the arms 62 and 63, the forks 71, 72 and 73, and the fastener devices *A*', *B*' according to the calculated positions and make them assume the calculated positions.

According to what has been described so far, the simulation bench 51 guarantees:
- correct positioning of the arms 62 and 63, the forks 71, 72 and 73, and the fastener devices *A*', *B*' and *C*' on the basis of the coordinates of the constraints *A*, *B* and *C*,
- correct relative inclination of the forks 71, 72 and 73 and the fastener devices *A*', *B*' and *C*' on the basis of the coordinates of the constraints *A*, *B* and *C*,
- correct positioning and locking of the flexible hose 1 on the fastener devices *A*', *B*' and *C*' on the basis of the coordinates of the constraints *A*, *B* and *C*,
- absence of interference with components of the simulation bench 51 that could prevent the flexible hose 1 from assuming some positions,
- control of the positions assumed by the flexible hose 1 and of the automatic movements, succeeding in avoiding any forcing due to uncoordinated movements during the translations, and
- a margin of tolerance in the relative positioning of the arms 62 and 63, the forks 71, 72 and 73 and the fastener devices *A*', *B*' and *C*'.

Expediently, the simulation bench 51 is also equipped with wheels and locking devices connected to the supporting feet 54 and 55 that allow it to be both moved and blocked.

At this point, after having described the simulation bench 51 in detail, it is possible to continue with the description of the method 10, providing further details on the phase of positioning the flexible hose on the simulation bench (block 12).

In particular, the phase of positioning the flexible hose on the simulation bench (block 12) comprises:
- mounting the flexible hose 1 on the physical simulation bench 51, i.e. clamping the flexible hose 1 to the bushes and/or chucks of the fastener devices *A*', *B*' and *C*'.

Then, the phase of reproducing on the simulation bench the positions of the points of constraint (block 13) comprises:
- calculating the corresponding positions of the arms 62 and 63, the forks 71, 72 and 73, and the fastener devices *A*', *B*' and *C*' on the basis of the positions assumed by the constraints *A*, *B* and *C*, based on the operating manoeuvres and calculated during the phase of simulating in a virtual environment (block 11), and
- making the arms 62 and 63, the forks 71, 72 and 73, and the fastener devices *A*', B' and *C*' assume the calculated positions corresponding to the positions assumed by the constraints *A*, *B* and *C* based on the operating manoeuvres of the motor vehicle.

If the simulation bench 51 is automatic, then the phase of reproducing on the simulation bench the positions of the points of constraint (block 13) is also based on the use of the computer 21, which:
- on the basis of the positions assumed by the constraints *A*, *B* and *C*, based on the operating manoeuvres and calculated during the phase of simulation in a virtual environment (block 11), calculates the corresponding positions of the arms 62 and 63, the forks 71, 72 and 73, and the fastener devices *A*', *B*' and *C*', and
- for each operating manoeuvre, controls the servomotor, the actuators and the position sensors of the simulation bench 51 via the hardware/software interface in order to move the arms 62 and 63, the forks 71, 72 and 73, and the fastener devices *A*', *B*' and *C*' according to the corresponding calculated positions and make them assume the corresponding calculated positions.

In addition, the phase of reproducing on the simulation bench the positions of the points of constraint (block 13) also comprises finding the corresponding position assumed by the flexible hose 1 for each operating manoeuvre through the use of a tracer point, for example, a Vectoron device. Alternatively, having specific instruments available, the respective full geometry of the flexible hose 1 is measured for each operating manoeuvre through the use of said specific instruments.

Expediently, calculation of the positions of the arms 62 and 63, the forks 71, 72 and 73, and the fastener devices *A*', *B'* and *C*', corresponding to the positions assumed by the constraints *A*, *B* and *C* based on the operating manoeuvres, can be based on the table of results provided by the phase of simulating in a virtual environment (block 11).

Then, the phase of calculating a three-dimensional mathematical model of the flexible hose (block 14) comprises, for each operating manoeuvre, initially reconstructing the axis of the flexible hose 1 in the CAD environment on the basis of the respective position of the flexible hose 1 found via the tracer point, and then the full geometry of the flexible hose 1 on the basis of this axis.

Alternatively, having directly measured the full geometry of the flexible hose 1 during the phase of reproducing on the simulation bench the positions of the points of constraint (block 13), the phase of calculating a three-dimensional mathematical model of the flexible hose (block 14) comprises, for each operating manoeuvre, reconstructing the corresponding, measured, full geometry of the flexible hose 1 in the CAD environment.

Then, the phase of calculating an integrated three-dimensional mathematical model (block 15) comprises calculating an integrated three-dimensional mathematical model of the entire suspension unit, by means of the computer 21 and on the basis of the three-dimensional mathematical model of the constraining and/or adjacent components 2, 3, 4 and 5 and the three-dimensional mathematical model of the flexible hose 1.

Lastly, the phase of re-simulating in a virtual environment (block 16) consists, in general, in simulating the operating manoeuvres of the motor vehicle in a virtual environment, or rather by means of the computer 21 and on the basis of said integrated three-dimensional mathematical model, to check for any interference between the flexible hose 1 and the constraining and/or adjacent components 2, 3, 4 and 5.

In particular, the phase of re-simulation in a virtual environment (block 16) comprises, for each operating manoeuvre, simulating in a virtual environment, or rather simulating through the use of the computer 21:
- the corresponding movements of the three-dimensional models of the constraining and/or adjacent components, and
- the interaction of said three-dimensional models with the respective full geometry of the flexible hose 1 reconstructed in the CAD environment. -

Accordingly, the phase of re-simulating in a virtual environment (block 16) also comprises detecting the following for each operating manoeuvre:
- any damage and/or obstructions to the flexible hose 1 caused by the components to which it is constrained 2, 3, 4 and/or that are adjacent to it 5, and
- any malfunctioning of the constraining and/or adjacent components 2, 3, 4 and 5 caused by the flexible hose 1.

Expediently, the phase of re-simulating in a virtual environment (block 16) can be based on the trace in electronic form provided by the phase of simulating in a virtual environment (block 11).

From the preceding description, the advantages can be immediately understood.

In particular, it is important to note that the simulation bench according to the present invention for the computer-aided system for checking the interaction or interference of a flexible hose with components to which, in use, it is constrained and/or that are operatively adjacent to it allows possible damage to the flexible hose and/or the constraining/adjacent components to be revealed without the need to wait for the physical construction of the components and opportune changes to be made by acting just on the CAD parts, with consequent time and cost savings. Furthermore, all this brings a decided improvement in product quality. In fact, by acting on the design in the setting-up phase, it is possible to make changes that would not be feasible in an advanced phase.

Finally, it is clear that various modifications can be made to the present invention, all falling within the scope of protection of the invention defined in the enclosed claims.

## Claims

1. Simulation bench (51) for use in a computer-aided system (20) designed to check interaction or interference of a flexible body (1) with other bodies (2, 3, 4, 5) arranged, in use, close by to the flexible body (1) and, together with the flexible body (1), on a means; the flexible body (1) having, in use, certain points of constraint (*A*, *B*, *C*);
the simulation bench (51) comprising:
• at least a pair of arms (61, 63), each carrying a respective constraint means (*A*', *C*') configured to provide a constraint point (*A*', *C*') for said flexible body (1); at least one of the arms (61, 63) being mobile along at least a first direction (x), and each constraint means (*A*', *C*') being connected to the respective arm so that it is angularly rotatable about a respective axis (*S1*, *S3*) parallel to the first direction (*x*); and
• position adjustment means operable to adjust positions of the constraint points (*A*', *B*' and *C*').

2. The simulation bench (51) of claim 1, wherein the constraint means (*A*', *C*') are angularly rotatable also about respective axes (*L*1, *L*3) orthogonal to the first direction (x).

3. The simulation bench (51) of claim 1 or 2, further comprising:
• at least a third arm (62) carrying a respective constraint means (*B*') and mobile along at least the first direction (*x*) and a third direction (*y*) orthogonal to the first direction (*x*).

4. The simulation bench (51) of claim 3, wherein the constraint means (*B'*) carried by the third arm (62) is connected to said third arm so that it is angularly rotatable about an axis (*S2*) parallel to the third direction (*y*).

5. The simulation bench (51) of claim 4, wherein the constraint means (*B*') carried by the third arm (62) is angularly rotatable also about an axis (*L2*) orthogonal to the third direction (*y*).

6. The simulation bench (51) of any preceding claim, wherein at least one of the constraint means (*A*', *B*', *C'*) is configured to allow rotation of the flexible body (1) around an axis of symmetry of said flexible body (1).

7. The simulation bench (51) of any preceding claim, wherein the position adjustment means are manually operable.

8. The simulation bench (51) of any preceding claim, wherein the position adjustment means are computer-controllable.

## Patentansprüche

1. Simulationsbank (51) zur Verwendung in einem computergestützten System (20) zur Überprüfung einer Interaktion oder Interferenz eines beweglichen Körpers (1) mit anderen Körpern (2,3,4,5), die während einer Verwendung nahe an dem beweglichen Körper (1) und zusammen mit dem beweglichen Körper (1) an einer Einrichtung angeordnet sind; wobei der bewegliche Körper (1) während der Verwendung gewisse Zwangspunkte (A,B,C) hat;
wobei die Simulationsbank (51) aufweist:
- mindestens ein Paar Arme (61,63), von denen jeder eine jeweilige Zwangseinrichtung (A',C') trägt, die für den beweglichen Körper (1) einen Zwangspunkt (A',C') bereitstellt; wobei mindestens einer der Arme (61,63) entlang mindestens einer ersten Richtung (x) beweglich ist und jede Zwangseinrichtung (A',C') so mit dem jeweiligen Arm verbunden ist, dass sie um eine jeweilige Achse (S1,S3), die parallel zur ersten Richtung (x) ist, drehbar ist; und
- Positionsanpassungseinrichtungen zum Anpassen von Positionen der Zwangspunkte (A',B' und C').

2. Simulationsbank (51) nach Anspruch 1, wobei die Zwangseinrichtungen (A',C') au-ßerdem um jeweilige Achsen (L1,L3), die orthogonal zur ersten Richtung (x) sind, drehbar sind.

3. Simulationsbank (51) nach Anspruch 1 oder 2, ferner mit mindestens einem dritten Arm (62), der eine jeweilige Zwangseinrichtung (B') trägt und entlang mindestens der ersten Richtung (x) und einer dritten Richtung (y), die orthogonal zur ersten Richtung (x) ist, beweglich ist.

4. Simulationsbank (51) nach Anspruch 3, wobei die von dem dritten Arm (62) getragene Zwangseinrichtung (B') so mit dem dritten Arm verbunden ist, dass sie um eine Achse (S2), die parallel zur dritten Richtung (y) ist, drehbar ist.

5. Simulationsbank (51) nach Anspruch 4, wobei die von dem dritten Arm (62) getragene Zwangseinrichtung (B') außerdem um eine Achse (L2), die orthogonal zur dritten Richtung (y) ist, drehbar ist.

6. Simulationsbank (51) nach einem der vorstehenden Ansprüche, wobei mindestens eine der Zwangseinrichtungen (A',B',C') konfiguriert ist, eine Drehung des beweglichen Körpers (1) um eine Symmetrieachse des beweglichen Körpers (1) zu erlauben.

7. Simulationsbank (51) nach einem der vorstehenden Ansprüche, wobei die Positions-anpassungseinrichtungen manuell betätigbar sind.

8. Simulationsbank (51) nach einem der vorstehenden Ansprüche, wobei die Positions-anpassungseinrichtungen computergesteuert sind.

## Revendications

1. Banc de simulation (51) destiné à être utilisé dans un système assisté par ordinateur (20) conçu pour vérifier l'interaction ou l'interférence d'un corps flexible (1) avec d'autres corps (2, 3, 4, 5) agencés, durant l'utilisation, à proximité du corps flexible (1) et, conjointement au corps flexible (1), sur un moyen ; le corps flexible (1) ayant, durant l'utilisation, certains points de contrainte (A, B, C) ;
le banc de simulation (51) comprenant :
- au moins une paire de bras (61, 63), chacun portant un moyen de contrainte correspondant (A', C') configuré pour fournir un point de contrainte (A', C') pour ledit corps flexible (1) ; au moins un des bras (61, 63) étant mobile suivant au moins une première direction (x) et chaque moyen de contrainte (A', C') étant connecté au bras correspondant de manière qu'il soit pivotant angulairement autour d'un axe respectif (S1, S3) parallèle à la première direction (x) ; et
- des moyens de réglage de position utilisables pour régler des positions des points de contrainte (A', B' et C').

2. Banc de simulation (51) selon la revendication 1, dans lequel les moyens de contrainte (A', C') sont également pivotants angulairement autour d'axes respectifs (L1, L3) orthogonaux à la première direction (x).

3. Banc de simulation (51) selon la revendication 1 ou 2, comprenant en outre :
- au moins un troisième bras (62) supportant un moyen de contrainte correspondant (B') et mobile suivant au moins la première direction (x) et une troisième direction (y) orthogonale à la première direction (x).

4. Banc de simulation (51) selon la revendication 3, dans lequel le moyen de contrainte (B') supporté par le troisième bras (62) est connecté audit troisième bras de manière qu'il soit pivotant angulairement autour d'un axe (S2) parallèle à la troisième direction (y).

5. Banc de simulation (51) selon la revendication 4, dans lequel le moyen de contrainte (B') supporté par le troisième bras (62) est également pivotant angulairement autour d'un axe (L2) orthogonal à la troisième direction (y).

6. Banc de simulation (51) selon l'une quelconque des revendications précédentes, dans lequel au moins un des moyens de contrainte (A', B', C') est configuré pour permettre la rotation du corps flexible (1) autour d'un axe de symétrie dudit corps flexible (1).

7. Banc de simulation (51) selon l'une quelconque des revendications précédentes, dans lequel les moyens de réglage de position sont actionnables manuellement.

8. Banc de simulation (51) selon l'une quelconque des revendications précédentes, dans lequel les moyens de réglage de position sont contrôlables par ordinateur.
